# FASCICULE DE BREVET EUROPEEN

(11) **EP 3 668 733 B1**
(45) Date de publication et mention de la délivrance du brevet: **25.08.2021**
(21) Numéro de dépôt: 18755517.2
(22) Date de dépôt: 17.07.2018
(51) Int. Cl.: B60G 21/05

(54) **PROCÉDÉ DE FABRICATION DE TRAVERSES DE VÉHICULES AUTOMOBILES AVEC BARRE DE GUIDAGE TRANSVERSAL**
VERFAHREN ZUR HERSTELLUNG VON QUERTRÄGERN FÜR KRAFTFAHRZEUGE MIT EINER QUERFÜHRUNGSSTANGE
METHOD FOR MANUFACTURING CROSS-MEMBERS FOR MOTOR VEHICLES WITH A TRANSVERSE GUIDE BAR

(30) Priorité: 17.08.2017 FR 1757715
(43) Date de publication de la demande: 24.06.2020
(73) Titulaire: PSA Automobiles SA, 78300 Poissy (FR)
(72) Inventeur: MINISINI, Antoine, 25230 Seloncourt (FR); POINSOT, Claude, 25200 Montbeliard (FR); BRIAND, Nicolas, 78350 Jouy en Josas (FR)
(86) Numéro de dépôt international: PCT/FR2018/051812
(87) Numéro de publication internationale: WO 2019/034815

(56) Documents cités:
- EP-A1- 1 785 289
- JP-B2- 4 276 566
- US-A1- 2004 104 547
- US-B1- 6 224 074

## Description

La présente invention concerne un système de traverse pour de train arrière pour des types de véhicules automobiles, et un véhicule automobile comportant un tel système de traverse.

Un type de train arrière de véhicule connu, présenté notamment par le document FR-A1-2892974, comporte une traverse guidée latéralement par une barre transversale, appelée aussi barre « Panhard », qui est disposée sensiblement horizontalement.

La barre de guidage fixée par des pivots d'un côté à la caisse du véhicule et de l'autre à une extrémité de la traverse, réalise en traversant le véhicule un guidage de cette traverse dans la direction transversale du véhicule lors des débattements de la suspension, en reprenant les efforts latéraux en particulier dans les virages.

La barre de guidage doit être disposée sensiblement horizontalement de manière à rester proche de la direction horizontale lors des débattements de la suspension. L'extrémité de la barre de guidage fixée sur la traverse présente alors un mouvement sensiblement vertical, avec une composante latérale quasiment nulle ce qui assure un bon guidage de cette traverse.

Le document US2004104547 montre la fixation d'une barre Panhard à différentes hauteurs.

Pour des raisons d'encombrement, un autre type de traverse connu, présenté notamment par le document JP-B2-4276566, comporte une traverse comprenant à une extrémité un support formé en tôle, s'étendant vers l'arrière, qui est soudée sur la face arrière de cette traverse. L'extrémité du support reçoit le pivot de la barre de guidage transversal, qui se trouve ainsi légèrement décalée de la traverse.

En particulier le support peut être tourné vers le haut, la barre de guidage transversal venant au-dessus de la traverse.

Par ailleurs les constructeurs automobiles réalisent dans certains cas des familles de véhicules comportant des traverses similaires guidées par une barre transversale, qui sont disposées à une hauteur variable par rapport à la caisse du véhicule.

De cette manière on propose des silhouettes différentes de véhicules avec une production rationnelle qui permet de réduire les coûts, présentant chacune une assiette de référence particulière constituant la hauteur de la traverse par rapport à la caisse du véhicule.

Avec un support soudé sur la traverse, il faut alors prévoir des références de traverses différentes comportant chacune un support présentant une hauteur particulière, afin d'ajuster la longueur de ce support donnant une position horizontale à la barre de guidage pour chaque assiette de référence.

La présente invention a notamment pour but d'éviter ces inconvénients de la technique antérieure.

Elle propose à cet effet un système de traverse de train arrière pour des types de véhicules automobiles, comportant une traverse commune équipée d'un support tourné vers le haut, ce support comprenant en partie supérieure une attache prévue pour recevoir l'extrémité d'une barre de guidage disposée dans la direction transversale du véhicule qui est la direction perpendiculaire au sens de marche de ce véhicule, chaque type de véhicules comportant une hauteur de référence particulière de la traverse par rapport à la caisse de ce véhicule, ce procédé étant remarquable en ce que pour chaque type de véhicule il détermine une hauteur de l'attache par rapport à la traverse donnant à la barre de guidage une position horizontale de son axe longitudinal, puis il réalise un support constituant une pièce indépendante qui après sa fixation sur la traverse commune donne cette hauteur de l'attache.

Un avantage de ce sytème est que l'on obtient pour une famille de véhicule présentant différentes hauteurs de référence de la traverse, une traverse standard identique pour tous les véhicules, recevant un support de hauteur variable afin de conserver la position horizontale de la barre de guidage, ce qui permet de standardiser fortement les composants ainsi que les procédés d'assemblage du train arrière du véhicule.

Le système de traverse réalisé avec ce procédé, peut comporter de plus une ou plusieurs des caractéristiques suivantes, qui peuvent être combinées entre elles.

Avantageusement, le procédé réalise les supports avec une partie inférieure de fixation sur les traverses qui est identique pour les différents types de véhicule. De cette manière on utilise un procédé d'assemblage standard pour tous les supports.

L'invention a pour objet un système de traverse fabriqué avec un procédé de fabrication comprenant l'une quelconque des caractéristiques précédentes, comportant des vis traversant la traverse en fixant le support sur cette traverse.

En particulier, la traverse peut comporter une tôle formant dans une section perpendiculaire à sa longueurun « U » ouvert.

Dans ce cas, avantageusement le système de traverse comporte des inserts tubulaires traversant la traverse, recevant à l'intérieur les vis de fixation.

Avantageusement, le système de traverse comporte une entretoise ajustée entre les deux ailes de la section en « U » de la traverse, qui est traversée par les inserts tubulaires.

Dans ce cas, avantageusement chaque insert tubulaire comporte un sertissage entre les deux faces extérieures de la traverse, de manière à former un serrage de l'entretoise.

En particulier, l'insert tubulaire peut comporter à une extrémité une collerette, et à l'autre extrémité recevant le support le sertissage formé dans l'épaisseur de la tôle de la traverse.

En particulier la traverse peut être déformable, en présentant une flexibilité en torsion suivant la direction de sa longueur.

L'invention a de plus pour objet un véhicule automobile équipé d'un système de traverse comprenant une traverse de train arrière, et d'une barre de guidage fixée à cette traverse par un support, remarquable en ce que ce système de traverse comporte l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente un système de traverse conçu avec un procédé selon l'invention pour un train arrière à traverse déformable, qui est équipé d'une barre de guidage transversal ;
- la figure 2 est une vue de détail du support de cette barre transversale ;
- la figure 3 est une vue en coupe de ce support, suivant un plan de coupe passant par l'axe des vis de fixation du support ; et
- les figures 4 et 5 sont des vues de détail de l'entretoise insérée dans la traverse sous le support, présentées respectivement en perspective et en coupe suivant un plan de coupe passant par l'axe des vis de fixation.

Dans la description qui suit la direction longitudinale du véhicule est définie comme étant la direction du sens de marche de ce véhicule, suivant sa longueur, et la direction transversale comme la direction perpendiculaire à cette direction longitudinale qui se trouve dans un plan horizontal.

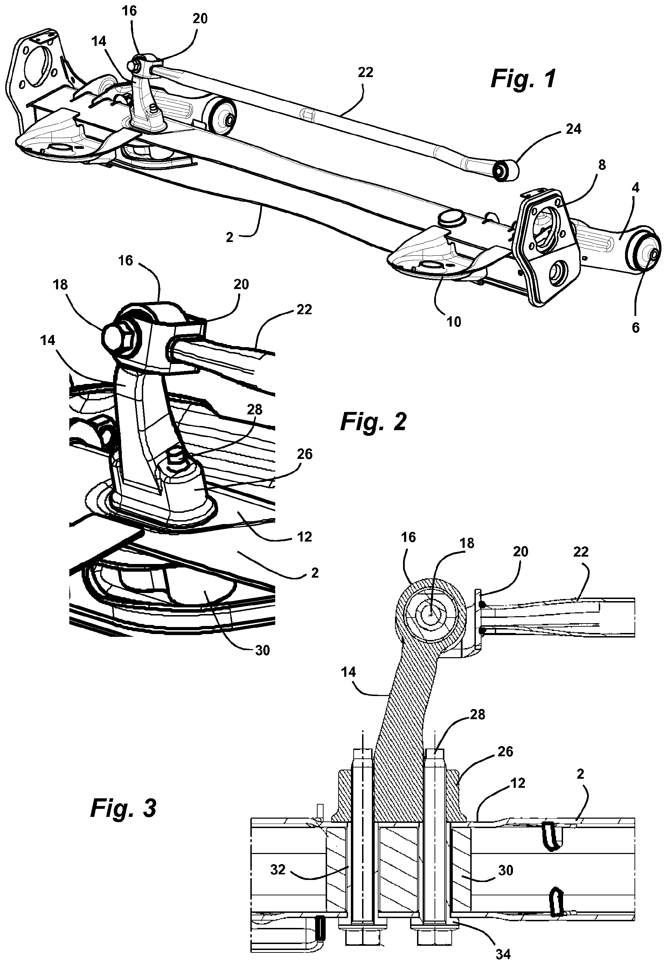

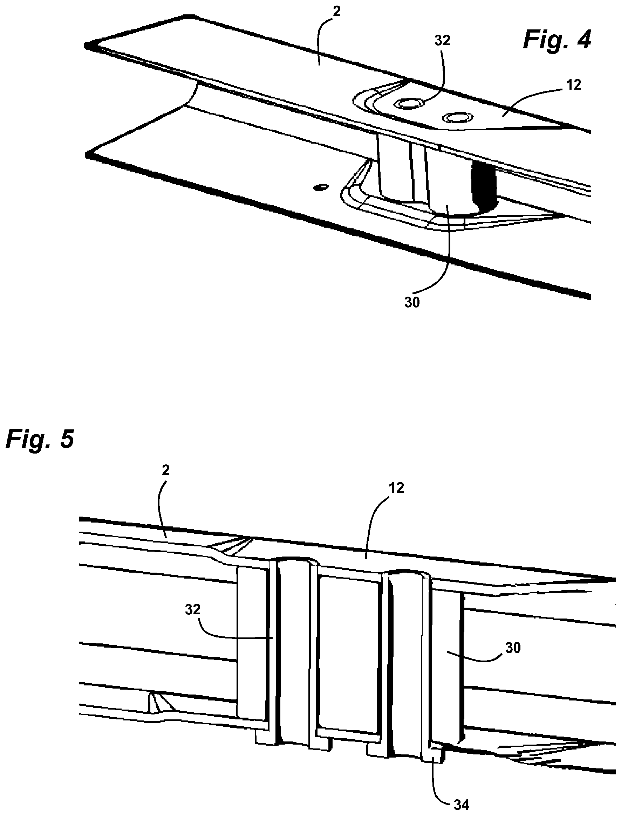

Les figures 1, 2, 3, 4 et 5 présentent une traverse de train arrière 2 formée dans une tôle, disposée suivant la direction transversale du véhicule, présentant une section perpendiculaire à sa longueur sensiblement constante formant un « U » posé horizontalement, dont l'ouverture est tournée vers l'arrière.

Chaque extrémité de la traverse 2 comporte vers l'avant un bras 4 disposé dans la direction longitudinale du véhicule, présentant à son extrémité avant une articulation 6 montée sur un bloc élastique, recevant une vis de fixation sur la caisse du véhicule disposée dans la direction transversale du véhicule.

Chaque extrémité de la traverse comporte une tôle verticale 8 recevant le moyeu d'une roue arrière, et vers l'arrière un peu avant cette extrémité, une coupelle sensiblement horizontale 10 recevant la base d'un ressort de suspension.

La traverse 2 déformable présente une certaine flexibilité en torsion suivant sa direction longitudinale propre, afin d'assurer une fonction anti-dévers qui applique un effort de rappel lors des différences de débattement des suspensions de chaque côté du véhicule. Cette flexibilité dépendant de l'épaisseur de la tôle de la traverse 2 et de la forme de sa section, est calculée pour obtenir une raideur souhaitée.

La traverse 2 présente du côté gauche, juste avant la fixation de la coupelle 10, deux méplats 12 formés chacun sur une aile de sa section, parallèles entre eux. Les méplats 12 s'arrêtent vers l'arrière avant le bord des ailes de la traverse 2, de façon à laisser une section constante au niveau de ce bord arrière.

Un support 14 allongé verticalement, présente une base plane en appui sur le méplat supérieur 12 de la traverse 2, qui est serré par deux vis 28 traversant cette traverse, écartées dans la direction transversale du véhicule, et alignées suivant cette direction.

L'extrémité supérieure du support 14 comporte un anneau 16 formant une attache présentant un axe disposé sensiblement dans la direction longitudinale du véhicule, recevant une vis de fixation 18 d'une chape 20 formée à l'extrémité d'une barre de guidage transversal 22. L'autre extrémité de la barre de guidage 22 comporte un anneau 24 présentant un axe disposé dans la direction longitudinale, prévu pour être inséré dans une chape fixée sous la caisse du véhicule.

De cette manière la traverse 2 est guidée transversalement par la barre de guidage 22 résistant aux efforts transversaux dans les virages, qui peut suivre les débattements de la suspension grâce à son montage avec des chapes d'extrémité, tout en restant proche de la direction horizontale.

La longueur de la barre de guidage 22 donne une très faible variation de la distance transversale entre ses extrémités, ce qui maintient la géométrie du train arrière.

Chaque vis 28 de fixation du support 14 engagée par le dessous, est ajustée dans un insert tubulaire 32 qui est lui-même ajusté dans un perçage de chaque aile de la traverse 2, et entre ces ailes dans un perçage d'une entretoise 30. L'extrémité supérieure filetée de chaque vis 28 est engagée dans un perçage taraudé traversant un bossage 26 disposé de chaque côté du support 14.

L'entretoise 30 comporte deux surfaces planes parallèles ajustées à l'intérieur des méplats 12 de la traverse 2, et un contour formant deux lobes centrés chacun sur une vis 28, de manière à réduire sa masse.

L'entretoise 30 maintient un espacement entre les deux méplats 12 en présentant une rigidité élevée, permettant un serrage important des vis 28 traversant la traverse 2.

Chaque insert 32 comporte une collerette 34 venant en dessous du méplat inférieur 12, puis une partie tubulaire ajustée dans un perçage de chaque méplat, et dans un perçage de l'entretoise 30 avec un petit jeu pour faciliter l'introduction. L'extrémité supérieure de l'insert 32 est sertie sur le méplat supérieur 12, en réalisant un épanouissement de cette extrémité dans l'épaisseur de la tôle autour du perçage de ce méplat.

De cette manière on introduit facilement l'entretoise 30 entre les deux méplats 12 en prévoyant un petit jeu. Ensuite on introduit les deux inserts 32 par le bas dans la traverse 2, puis on sertit l'extrémité supérieure de ces inserts en réalisant un serrage axial des tôles de la traverse ce qui supprime ce jeu.

On obtient un serrage axial des deux méplats 12 et de l'entretoise 30, entre la collerette inférieure 34 et le sertissage supérieur, qui garantit le placage et le serrage de cet ensemble avant le montage des vis 28 du support 14. On réalise un sous-ensemble prêt au montage sur le véhicule.

On notera que le serrage de l'ensemble des composants superposés, comprenant pour chaque vis 28 la collerette 34 de l'insert 32, les deux méplats 12 de la traverse 2 et les deux faces de l'entretoise 30, est important pour garantir le maintien du couple de serrage de ces vis dans le temps.

De plus après un dévissage des vis 28 en cas d'intervention en après-vente nécessitant un démontage du support 14, les méplats 12 de la traverse 2 restent serrés sur l'entretoise 30 ce qui facilite le remontage.

L'écartement dans la direction transversale des deux vis 28 donne une grande stabilité latérale au support 14, dans la direction où il est soumis à des contraintes importantes venant de la barre de guidage 22.

La tenue des vis 28 en fatigue peut être supérieure à celle d'une soudure pratiquée suivant l'art antérieur pour fixer le support 14 sur la traverse 2, ce qui assure la tenue dans le temps de ce support.

De plus l'effort de placage de la tôle des méplats 12 sur l'entretoise 30 étant donné par les inserts 32, cet effort n'est pas délivré par les vis 28 ce qui permet de les calculer au plus juste.

On réalise ainsi au préalable un sous-ensemble formé par la traverse 2 ayant reçu l'entretoise 30 maintenue par les deux inserts 32, pouvant être facilement manipulé sans risquer de perdre cette entretoise, qui peut recevoir par la suite de manière simple le support 14 par le serrage des deux vis 28.

Le système de traverse selon l'invention permet de s'adapter facilement et de manière économique à différentes traverses déformables 2 présentant une même hauteur totale de sa section, réalisées avec des épaisseurs de tôle variées afin d'adapter sa raideur en torsion suivant sa direction longitudinale.

Dans ce cas on conserve les mêmes inserts 32 et les mêmes vis 28, et on réduit la hauteur de l'entretoise 30 en fonction de l'épaisseur des tôles de la traverse 2 afin d'ajuster cette entretoise à l'intérieur de la traverse.

Le procédé de conception réalise pour chaque type de véhicules comportant une traverse 2 commune, et une hauteur de référence particulière de cette traverse par rapport à la caisse du véhicule, une première étape de calcul de la hauteur de l'anneau 16 par rapport à la traverse 2, formant une attache de la barre de guidage 22, donnant à cette barre une position horizontale avec la hauteur de référence.

Puis dans une deuxième étape le procédé conçoit un support 14 qui est rapporté sur la traverse commune 2 pour tous les types de véhicules, donnant cette hauteur de l'anneau 16.

Avantageusement tous les supports 14 présentent des formes similaires, comprenant une partie inférieure de fixation sur les traverses 2 qui est identique pour les différents types de véhicule, une partie supérieure comprenant l'anneau 16 identique, et une longueur de son corps intermédiaire qui varie. De cette manière ces supports 14 sont fabriqués et fixés avec un procédé commun.

On obtient ainsi un système modulaire qui utilise les mêmes postes de fabrication comportant un procédé de fabrication unique et robuste, pour réaliser le sertissage des inserts 32 et le vissage des vis 28, avec différentes épaisseurs de tôle des traverses 2 et hauteurs des supports 14.

## Revendications

1. Système de traverse de train arrière pour des types de véhicules automobiles comportant une traverse commune (2) équipée d'un support (14) tourné vers le haut, ce support (14) comprenant en partie supérieure une attache (16) prévue pour recevoir l'extrémité d'une barre de guidage (22) disposée dans la direction transversale du véhicule qui est la direction perpendiculaire au sens de marche de ce véhicule, chaque type de véhicules comportant une hauteur de référence particulière de la traverse (2) par rapport à la caisse de ce véhicule, pour chaque type de véhicule est déterminé une hauteur de l'attache (16) par rapport à la traverse (2) donnant à la barre de guidage (22) une position horizontale de son axe longitudinal, puis est réalisé ledit support (14) constituant une pièce indépendante qui après sa fixation sur la traverse commune (2) donne cette hauteur de l'attache (16), **caractérisé en ce qu'**il comporte des vis (28) traversant la traverse (2) en fixant le support (14) sur cette traverse (2).

2. Système de traverse selon la revendication 1, **caractérisé en ce que** les supports (14) sont réalisés avec une partie inférieure de fixation sur les traverses (2) qui est identique pour les différents types de véhicule.

3. Système de traverse selon la revendication 1 ou 2, **caractérisé en ce que** la traverse (2) comporte une tôle formant dans une section perpendiculaire à sa longueur un « U » ouvert.

4. Système de traverse selon la revendication 3, **caractérisé en ce qu'**il comporte des inserts tubulaires (32) traversant la traverse (2), recevant à l'intérieur les vis de fixation (28).

5. Système de traverse selon la revendication 3 ou 4, **caractérisé en ce qu'**il comporte une entretoise (30) ajustée entre les deux ailes de la section en « U » de la traverse (2), qui est traversée par les inserts tubulaires (32).

6. Système de traverse selon les revendications 4 et 5, **caractérisé en ce que** chaque insert tubulaire (32) comporte un sertissage entre les deux faces extérieures de la traverse (2), de manière à former un serrage de l'entretoise (30).

7. Système de traverse selon la revendication 6, **caractérisé en ce que** l'insert tubulaire (32) comporte à une extrémité une collerette (34), et à l'autre extrémité recevant le support (14) le sertissage formé dans l'épaisseur de la tôle de la traverse (2).

8. Système de traverse selon l'une quelconque des revendications précédentes, **caractérisé en ce que** la traverse (2) est déformable, en présentant une flexibilité en torsion suivant la direction de sa longueur.

9. Véhicule automobile équipé d'un système de traverse comprenant une traverse (2) de train arrière, et d'une barre de guidage (22) fixée à cette traverse (2) par un support (14), **caractérisé en ce que** ce système de traverse est selon l'une quelconque des revendications précédentes.

## Patentansprüche

1. Hinterachsquerträgersystem für Kraftfahrzeugtypen mit einem gemeinsamen Querträger (2), der mit einer nach oben gerichteten Stütze (14) ausgestattet ist, wobei diese Stütze (14) im oberen Teil eine Klammer (16) zur Aufnahme des "Endes" aufweist eine Führungsstange (22), die in der Querrichtung des Fahrzeugs angeordnet ist, die Richtung senkrecht zur Fahrtrichtung dieses Fahrzeugs ist, wobei jeder Fahrzeugtyp eine bestimmte Bezugshöhe des Querträgers (2) in Bezug auf die Karosserie aufweist bei diesem Fahrzeug wird für jeden Fahrzeugtyp eine Höhe der Befestigung (16) relativ zum Querträger (2) bestimmt, die der Führungsstange (22) eine horizontale Position ihrer Längsachse verleiht, dann wird die Stütze (14) hergestellt, die ein unabhängiges Teil, das nach seiner Befestigung an dem gemeinsamen Querträger (2) diese Höhe des Befestigungselements (16) ergibt, **dadurch gekennzeichnet, dass** es Schrauben (28) umfasst, die durch den Querträger (2) hindurchgehen, um die Stütze (14) zu befestigen das zu schwärmen (2).

2. Querträgersystem nach Anspruch 1, **dadurch gekennzeichnet, dass** die Stützen (14) mit einem für die verschiedenen Fahrzeugtypen identischen Unterteil zur Befestigung an den Querträgern (2) ausgeführt sind.

3. Querträgersystem nach Anspruch 1 oder 2, **dadurch gekennzeichnet, dass** der Querträger (2) in einem Abschnitt bildet einen Bogen umfasst senkrecht zu seiner Länge einen offenen "U".

4. Querträgersystem nach Anspruch 3, **dadurch gekennzeichnet, daß** sie umfassen rohrförmige Einsätze (32), die durch den Querträger (2), Empfangen von innerhalb der Befestigungsschrauben (28).

5. Querträgersystem nach Anspruch 3 oder 4, **dadurch gekennzeichnet, dass** es einen Abstandhalter (30) umfasst, der zwischen den beiden Flügeln des "U" Profils des Querträgers (2) angebracht ist, der von den rohrförmigen Einsätzen (32) durchquert wird.

6. Querträgersystem nach den Ansprüchen 4 und 5, **dadurch gekennzeichnet, dass** jeder rohrförmige Einsatz (32) zwischen den beiden Außenflächen des Querträgers (2) eine Umbördelung aufweist, um eine Klemmung des Abstandhalters (30) zu bilden.

7. Querträgersystem nach Anspruch 6, **dadurch gekennzeichnet, dass** der rohrförmige Einsatz (32) an einem Ende einen Kragen (34) aufweist und am anderen Ende den Träger (14) die in der Dicke des Querträgers ausgebildete Sicke aufnimmt Platte (2).

8. Querträgersystem nach einem der vorhergehenden Ansprüche, **dadurch gekennzeichnet, dass** der Querträger (2) verformbar ist und in seiner Längsrichtung eine Torsionsflexibilität aufweist.

9. Kraftfahrzeug mit einem Querträgersystem bestehend aus einem Querträger (2) der Hinterachse und einer an diesem Querträger (2) durch einen Träger (14) befestigten Führungsstange (22), **dadurch gekennzeichnet, dass** dieses Schlafsystem nach einem der vorhergehenden Ansprüche ist.

## Claims

1. System rear axle cross member for types of motor vehicles comprising a common cross member (2) equipped with a support (14) facing upwards, this support (14) comprising in the upper part a fastener (16) intended to receive the end of a guide bar (22) arranged in the transverse direction of the vehicle which is the direction perpendicular to the direction of travel of this vehicle, each type of vehicle comprising a particular reference height of the cross member (2) with respect to at the body of this vehicle, for each type of vehicle is determined a height of the attachment (16) relative to the cross member (2) giving the guide bar (22) a horizontal position of its longitudinal axis, then is realized said support (14) constituting an independent part which after its fixing on the common cross member (2) gives this height of the fastener (16), **characterized in that** it comprises screws (28) passing through the cross member (2) by fixing the support (14) on this cross (2).

2. Cross member system according to claim 1, **characterized in that** the supports (14) are made with a lower part for fixing on the cross members (2) which is identical for the different types of vehicle.

3. Cross member system according to claim 1 or 2, **characterized in that** the cross member (2) comprises a sheet forming in a section perpendicular to its length an open " U ".

4. Cross member system according to claim 3, **characterized in that** it comprises tubular inserts (32) passing through the cross member (2), receiving inside the fixing screws (28).

5. Cross member system according to claim 3 or 4, **characterized in that** it comprises a spacer (30) fitted between the two wings of the " U " section of the cross member (2), which is crossed by the inserts tubular (32).

6. Cross member system according to claims 4 and 5, **characterized in that** each tubular insert (32) comprises a crimped between the two outer faces of the cross member (2), so as to form a clamping of the spacer (30).

7. Cross member system according to claim 6, **characterized in that** the tubular insert (32) has at one end a collar (34), and at the other end receiving the support (14) the crimp formed in the thickness of the cross member plate (2).

8. Cross member system according to any one of the preceding claims, **characterized in that** the cross member (2) is deformable, having torsional flexibility in the direction of its length.

9. Motor vehicle equipped with a cross member system comprising a cross member (2) of the rear axle, and a guide bar (22) fixed to this cross member (2) by a support (14), **characterized in that** this sleeper system is according to any one of the preceding claims.
